# EUROPEAN PATENT APPLICATION

(11) **EP 2 747 406 A1**
(43) Date of publication of application: **25.06.2014**
(21) Application number: 12306661.5
(22) Date of filing: 21.12.2012
(51) Int. Cl.: H04N 1/32

(54) **Method for embedding auxiliary data in an image, method for reading embedded auxiliary data in an image, and medium personalized by selective exposure to photons**

(71) Applicant: Gemalto SA, 92190 Meudon (FR)
(72) Inventor: Lesur, Jean-Luc, 92190 Meudon (FR)
(74) Representative: Cour, Pierre

(57) **Abstract**

The invention relates to a method for producing an image with embedded auxiliary data in an image area on a physical media. The method comprises the steps of
- determining an altering pattern of sub-sub-pixels to be revealed by altering the state of at least one photon-sensitive layers across the physical media for producing said image in said image area,
- modifying the location of the sub-sub-pixels to be revealed of at least some areas of non-uniform sub-pixels within the altering pattern according to a data coding pattern for embedding said auxiliary data,
- altering the state of at least one of the at least one photon-sensitive layers according to said modified altering pattern across the physical media thereby selectively revealing a selected subset of sub-sub-pixels.

## Description

### FIELD OF THE INVENTION

The present invention relates generally to personalization of secure documents, and more particularly to embedding of auxiliary data in an image on a document by selectively revealing colored, black, and white pixels by exposing one or more layers of photon-sensitive materials to photons.

### BACKGROUND AND PRIOR ART

Many forms of physical media require both mass-production and end-user personalization. For example, identity cards may need to be produced for very large population pools, yet every individual card has to uniquely identify the person carrying the card. The high-volume manufacturing phase may be performed on relatively expensive equipment because the equipment cost may be amortized over very large production runs. On the other hand, the end-user personalization may be preferably carried out at customer locations in relatively low volumes, thus, requiring much lower equipment costs.

For many identity cards, security of all information on the card, whether digitally recorded or physical features of the card, is of paramount importance. The security is sometimes tied to some features that reveal whether the media has physically been tampered with. One mechanism for thwarting attempts to tamper with identity cards is lamination. By securing the physical media in a lamination layer that may not delaminated without destroying the physical pristineness of the media goes very far to protect the security integrity of media.

One very important mechanism for tying an individual to an identity object is the placement of a person's photograph on the identity object. Driver's licenses, passports, identity cards, employee badges, etc., all usually bear the image of the individual to whom the object is connected.

Laser engraving provides one prior art technique for personalizing an identity card post-issuance with a photograph.

W02011/045180 in the name of the applicant discloses a method for producing an image in an image area on a physical media.

This method comprises the steps of printing a print-pixel pattern on a substrate surface wherein the print-pixel pattern comprises a plurality of printpixels. Each printpixel is composed of a plurality of differently-colored sub-pixels. Then the print-pixel pattern is covered with at least one photon-sensitive layer. Each photon-sensitive layer may be in one of a plurality of states wherein each photon-sensitive layer is alterable at selected locations from one of two states to another state of two states.

When altering the state of at least one of the at least one photon-sensitive layers in a selected pattern across the physical media, a selected subset of sub-pixels and portions of photon- sensitive layers corresponding to other sub-pixels is revealed thereby producing an image composed of the revealed sub-pixels and photon-sensitive layer portions corresponding to other sub-pixels.

A first photon-sensitive layer may be visually opaque and transforms into visually transparent upon exposure to photons of a first selected wavelength and intensity. A second photon-sensitive layer may be visually transparent and transforms into visually opaque upon exposure to photons of a second selected wavelength and intensity. A first selected portion of the first photon-sensitive layer is exposed to reveal sub-pixels on the surface or any photon-sensitive layers between the print-pixel pattern located on the surface and the first photon-sensitive layer; and a second selected portion of the second photon-sensitive layer is exposed to occlude sub-pixels on the surface and any photon-sensitive layers between the surface the second photon- sensitive layer.

In order to enhance security of such documents, there is a need to embed auxiliary data into the image. In case the image is an ID photo, such auxiliary data may be the name of the person on the photo with its birthday and some other personal information. But also other security information may be embedded.

### SUMMARY OF THE INVENTION

The present invention aims to propose a method allowing embedding auxiliary data in an image without significantly alter the quality of the image. For this purpose, the invention proposes a method for producing an image with embedded auxiliary data in an image area on a physical media presenting a printed print-pixel pattern on a substrate surface wherein the print-pixel pattern comprises a plurality of printpixels, each printpixel being composed of a plurality of differently-colored sub-pixels, each sub-pixel comprising at least two neighboring sub-sub-pixel of same color, the print-pixel pattern being covered with at least one photon-sensitive layer wherein the at least one photon-sensitive layer is in one of a plurality of states wherein the at least one photon-sensitive layer is alterable at selected locations from one of two states to another state of two states, comprising:
- determining an altering pattern of sub-sub-pixels to be revealed by altering the state of at least one of the at least one photon-sensitive layers in said altering pattern across the physical media for producing said image in said image area,
- modifying the sub-sub-pixels to be revealed of at least some sub-pixels partly revealed by the at least one photon sensitive layer within the altering pattern according to a data coding pattern for embedding said auxiliary data, altering the state of at least one of the at least one photon-sensitive layers
according to said modified altering pattern across the physical media thereby selectively revealing a selected subset of sub-sub-pixels

Therefore, without significantly altering the quality of the produced image, auxiliary data can be embedded. As the method can be executed for example by a computer, the method may be implemented as supplemental instructions within a software program containing instructions for producing an image as known in W02011/045180 and thus does only add very few additional costs for embedding auxiliary data, while increasing the security level of such a document with embedded auxiliary.

According to one aspect, the sub-sub-pixels of same color form parallel lines within said printpixels, said lines corresponding to a writing / reading direction of said auxiliary data.

Within said partly revealed sub-pixels may be encoded with the data coding pattern depending on the location of a revealed sub-sub-pixel within a sub-pixel.

In particular the location of a revealed sub-sub-pixel within a sub-pixel may correspond to a defined data-value, for example a bit-value, like "1" and "0".

Alternately, the location of a revealed sub-sub-pixel within a sub-pixel may correspond to a determinable location or a modification of the determinable location as a function of the data-value.

The invention also concerns a method for reading embedded auxiliary data in an image area on a physical media presenting a printed print-pixel pattern on a substrate surface wherein the print-pixel pattern comprises a plurality of printpixels, each printpixel being composed of a plurality of differently-colored sub-pixels, each sub-pixel comprising at least two neighboring sub-sub-pixel of same color, the print-pixel pattern being covered with at least one photon-sensitive layer wherein the at least one photon-sensitive layer is altered at selected locations from one of two states amongst a revealing state and a non-revealing state, comprising:
- identifying in said image non-uniform sub-pixels corresponding to sub-pixels having both revealed and non-revealed sub-sub-pixels,
- converting said identified non-uniform sub-pixels into auxiliary data taking into account revealed and non-revealed sub-sub-pixels according to a data decoding pattern for embedded auxiliary data.

Within said identified non-uniform sub-pixels, the data decoding pattern may be based on the location of a revealed sub-sub-pixel within a sub-pixel, the location of a revealed sub-sub-pixel within a sub-pixel corresponds for example to a defined data-value, like a bit-value.

The invention also concerns a medium personalized by selective exposure to photons, comprising:
- a print-pixel pattern layer having a print pixel pattern comprising a plurality of print pixels, each printpixel being composed of a plurality of differently-colored sub-pixels; each sub-pixel comprising at least two neighboring sub-sub-pixel of same color,
- at least one photosensitive layer composed of a photon-sensitive material that transitions from a first state to a second state upon exposure to photons of a first wavelength and intensity,
at least some sub-pixels having revealed and non-revealed sub-sub-pixels on which auxiliary data are encoded according to a coding pattern.

### BRIEF DESCRIPTIONS OF THE DRAWINGS

Other advantages and characteristics will appear with the reading of the description of the following figures, among which:
- Figure 1 is a top-view of an identity card according to one embodiment of the technology described herein.
- Figures 2(a) through 2(c) are cross-section views of three alternative embodiments of the identity card illustrated in Figure 1.
- Figure 3 illustrates the chemical reaction relied upon in one embodiment for the purpose of altering specific locations of one layer of the card depicted in Figures 2 (a)-(c) from transparent to opaque.
- Figure 4 is an illustration of one embodiment of a print-pixel grid.
- Figure 5 is an example photographic image presented for illustrative purposes,
- Figure 6(a) and 6(b) are magnifications of a portion of the photographic image of Figures 5 and 7 respectively,
- Figure 7 is an example photographic image presented for illustrative purposes containing embedded auxiliary data.

In the appended figures, similar components and/or features may have the same reference label. Further, various components of the same type may be distinguished by following the reference label by a dash and a second label that distinguishes among the similar components or by appending the reference label with a letter or a prime (') or double-prime ("). If only the first reference label is used in the specification, the description is applicable to any one of the similar components having the same first reference label irrespective of the second reference label appended letter, or prime.

### DETAILED DESCRIPTION

W02011/045180 is hereby incorporated by reference in the present description.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

An embodiment of the invention, provides a mechanism by which physical media such as identification cards, bank cards, smart cards, passports, value papers, etc. may be personalized in a post-manufacturing environment. This technology may be used to place images onto such articles inside a lamination layer after the lamination layer has been applied. In an alternative embodiment, a protective lamination layer is added to the identity card after personalization. Thus, the articles, for example, smart cards, may be manufactured in a mass produced fashion in a factory setting and personalized on relatively inexpensive and simple equipment at a customer location. The technology provides a mechanism for thus personalizing articles, such as smart cards, bank cards, identity cards, with an image that is tamper resistant. Herein, the purpose of providing a clear narrative, the term identity card is used to refer to the entire class of physical media to which the herein-described techniques may be applied even if some such physical media are not "cards" in a strict sense. Without limiting the application of the term identify card it is intended to include all such alternatives including but not limited to smart cards (both contact and contactless smart cards), driver's licenses, passports, government issued identity cards, bankcards, employee identification cards, security documents, personal value papers such as registrations, proofs of ownership, etc.

In a typical smart card lifecycle, a card is initially manufactured in a factory setting. The manufacturing step includes placing an integrated circuit module and connectors onto a plastic substrate, typically in the shape of a credit card. The integrated circuit module may include systems programs and certain standard applications. The card may also be imprinted with some graphics, e.g., the customer's logo.

Next the card is delivered to the customer.

The customer, for example, a government agency, a corporation, or a financial institution, who wishes to issue secure identification cards to its customers, the end-users of the cards, next personalizes the cards. Personalization, "perso" in industry parlance, includes the customer placing its application programs onto the card, and end-user specific information on the card. Perso may also include personalizing the physical appearance of the card for each end-user, e.g., by printing a name or photograph on the card.

Once the card has been personalized, the card is issued to the end-user, e.g., an employee or a client of the customer. Other identity cards have similar life cycles.

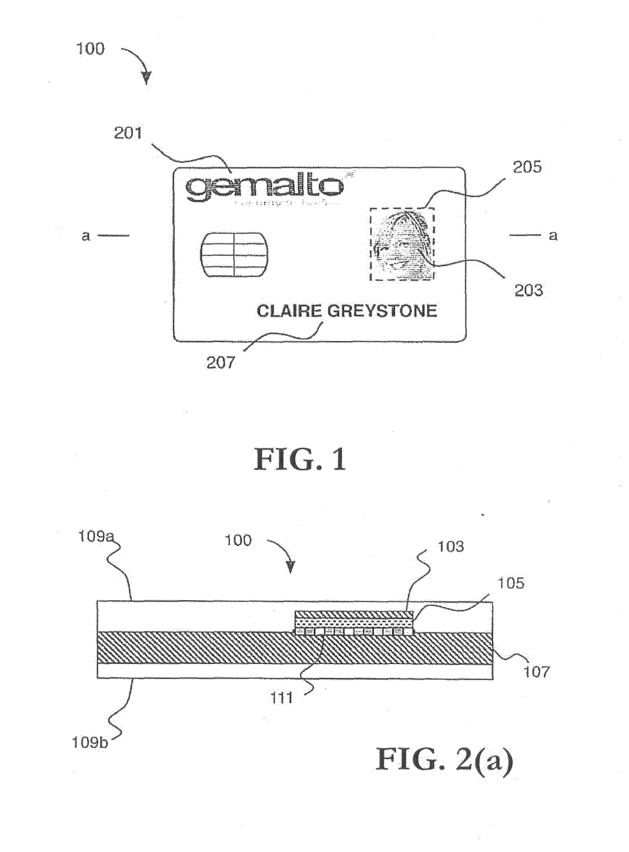

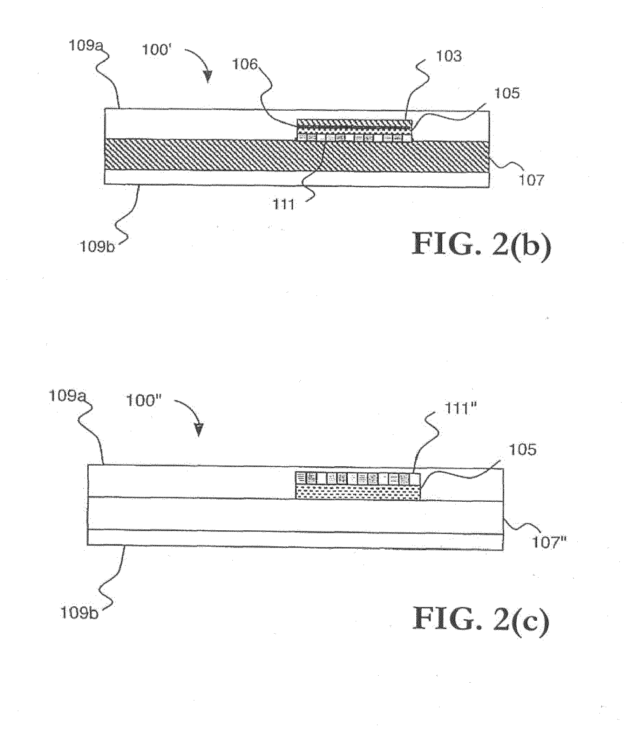

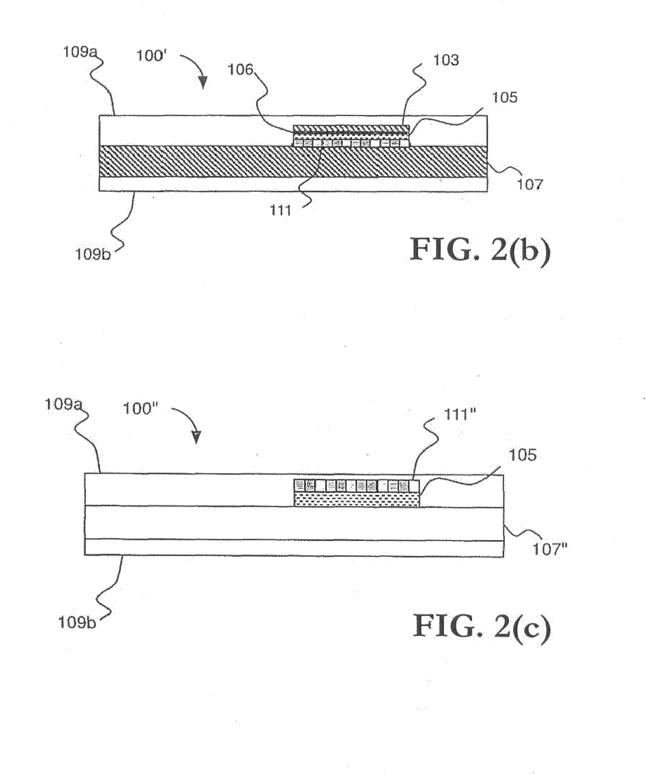

Figure 1 is a top- view of a medium personalizable by selective exposure to photons, for example of an identity card 100 according to one embodiment of the technology described herein. Briefly, the identity card 100 is provided with an image area 205 that is constructed from several layers of material located between a substrate (e.g., a PC core) and a lamination layer. The bottom layer of these image-area layers is a print-pixel grid (see Figures 2 through 7) which consists of a plurality of specifically arranged areas having distinct colours. The print- pixel grid is covered by a transparent layer and an opaque layer of photon-sensitive materials. The transparent layer may be selectively altered to some level of opaque black and the opaque layer may be selectively altered to transparent. Thus, by selective manipulation of the photon-sensitive layers, any given location of the image area 205 may be made to display a specific colour from the print-pixel grid, black (or a darkened shade of the underlying grid sub-sub-pixel), or white. By selectively manipulating the photon- sensitive layers of the addressable locations (as is discussed herein below, the addressable locations are referred to herein as sub-sub-pixels) of the image area, an image may be produced. The structure of the print-pixel grid and the photon-sensitive layers, and the process of manipulating these layers to produce an image are discussed in greater detail herein below.

The identity card 100 may have been printed with a company-logo 201 or other graphic. Through a unique process and manufacture described in greater detail herein below, the identity card 100 contains a colour image 203, for example, a photograph of the intended end-user, printed in an image area 205. The identity card 100 may further have been personalized with a printed name 207.

Figure 2(a) is a cross-section of the identity card 100 of Figure 1 taken along the line a-a. The identity card 100 consists of a substrate 107. The substrate 107 may be constructed from a plastic material, for example, selected from polycarbonate polyvinyl chloride (PVC), acrylonitrile butadiene styrene (ABS), PVC in combination with ABS, polyethylene terephthalate (PET), PETG, and polycarbonate (PC).

The identity card 100 may include additional layers, e.g., not represented laser-engravable PC layers and transparent PC layers.

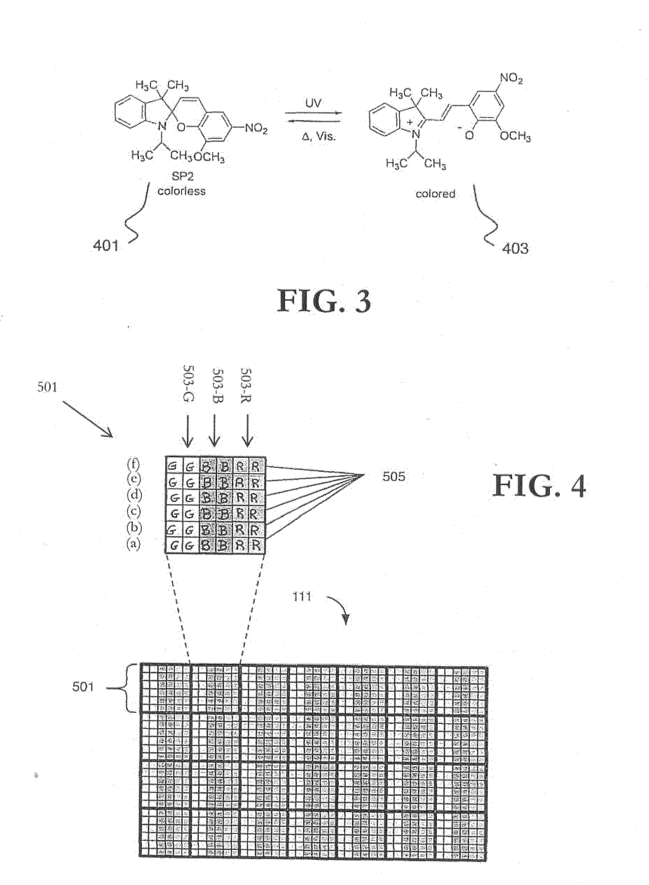

A print-pixel grid 111 is located on one surface of the substrate 107 (substrate 107 is meant herein to refer to any of the internal layers of the card 100) in an area of the substrate corresponding to the image area 205. The print-pixel grid 111, which is described in greater detail herein below in conjunction with, for example, Figures 4 through 7, may be printed onto the substrate using conventional offset printing or using any other technique for accurately laying down a coloured pattern onto the substrate.

The print-pixel grid 111 is covered by a transparent photon-sensitive layer 105. The transparent photon-sensitive layer 105 is manufactured from a material that converts from being transparent to some level of opaqueness upon being exposed to photons of particular wavelength and intensity. Suitable materials include carbon- doped polycarbonate. Traditionally polycarbonate (PC) ID products have been personalized using laser-engraving technology. This personalization is based on a laser beam heating carbon particles inside specific polycarbonate layers to the extent that the polycarbonate around the particle turns black. While the particles could be materials other than carbon, it is the intrinsic property of polycarbonate that creates the desired contrast and number of grey levels to allow creation of a photographic image. The grey tone is controlled by the laser power and speed of scanning across the image area 205. Thus, a carbon-doped transparent PC layer may be selectively altered into an opaque layer along the darkness scale by exposing select location with an Nd-YAG laser or Fiber Laser. An Nd-YAG laser emits light at a wavelength of 1064 nano-meters in the infrared light spectrum. Other Nd-YAG laser wavelengths available include 940, 1120, 1320, and 1440 nano-meters. These wavelengths are all suitable for turning a transparent PC layer opaque black or partially opaque with an intensity in the range of 10 to 50 watts. In a typical application, the Nd-YAG laser is scanned (as described in WO2001/045180) over the image area for duration of approximately 4 seconds exposing specific locations as required. Fiber lasers that are suitable for turning the transparent PC layer opaque or partially opaque operate in wavelengths in the range of 600 to 2100 nano-meters. While some specific lasers and wavelengths are discussed herein above, any alternative photon source, e.g., a UV laser, that converts a location on a transparent PC layer opaque may be employed in lieu thereof.

The transparent photon-sensitive layer 105 is covered with an opaque layer 103 that may be altered into a transparent layer by exposure to photons in a particular wavelength and intensity. Suitable materials for the opaque-to -transparent photon-sensitive layer include a white bleachable ink that may be laid down on top of the transparent-to-opaque layer 105 through thermal transfer or dye sublimation, for example. Examples, include SICURA CARD 110 N WA (71-010159-3-1 180) (ANCIEN CODE 033250) from Siegwerk Druckfarben AG, Sieburg, Germany, Dye Diffusion Thermal Transfer (D2T2) inks available from Datacard Group of Minnetonka, Minnesota, USA or Dai Nippon Printing Co., Tokyo, Japan. Such materials may be altered selectively by exposing particular locations by a UV laser at a wavelength of, for example, 355 nano-meters or 532 nano-meters with an intensity in the range of 10 to 50 watts for a few milliseconds per addressable location (sub-sub- pixel). To alter the sub-sub-pixels in the opaque-to-transparent layer 103 the laser is continuously scanned over the image area exposing those sub-sub-pixels that are to be altered from opaque white to transparent in the opaque-to-transparent layer 103 by ink bleaching or evaporation. In an alternative embodiment, the same UV laser wavelength that removes the ink of the opaque-to-transparent layer 103 may also be used to alter the carbon-doped transparent-to -opaque layer 105 below the removed sub-sub-pixels of the opaque-to-transparent layer 103 when there is residual power available from the UV laser.

In an alternative embodiment the opaque-to-transparent layer 103 is a photon-sensitive layer that is amenable to a dry photographic process that requires no chemical picture treatment. One example is spiropyran photochrom with titanium oxide (similar to the material used to produce with PVC). This process is based on the photochemical behaviour of coloured complexes between spiropyrans and metal ions. Figure 3 illustrates the chemical reaction. When spiropyran SP2 401, which is a closed structure, is exposed to UV light, it transforms into an open structure 403 that is coloured. A suitable alternative to SP2 401 is spiropyran indolinic (3',3'-dimethyl-1-isopropyl-8-methoxy-6-nitrospiro[2*H*-1-benzopyrane-2,2-indoline]).

In an alternative embodiment, illustrated in Figure 2(b), the opaque-to- transparent layer 103 is augmented with a doped organic semiconductor layer 106. The doped organic semiconductor layer 106 is useful as an amplifier to improve the speed by which the opaque-to-transparent layer 103 transforms from opaque to transparent. Example materials for the doped organic semiconductor layer 106 include polyvinyl carbazol and polythiophenes. A polyvinyl carabazol layer 106 may be laid down by evaporation of 2.5 grams of polyvinyl carabazol in 50 cubic-centimeters of diclilorometliane. The semiconductor layer 106 is preferably doped to match the energy levels required for a photochromic effect in the opaque-to- transparent layer 103.

The photochromic effect of spiropyran-based opaque-to-transparent layer 103 may be achieved by exposure to visible or ultraviolet light. The preferred intensity is in the range of 50 to 200 watts at a distance of 30 to 300 millimetres for a duration of 10 to 300 seconds.

The principle of preparation of emulsions for a die colour printing process has been patented by Prof. Robillard (US Pat. Appl. 2004259975). The results of feasibility investigation are described in a J. Robillard et al, Optical Materials, 2003, vol. 24, pp 491-495. The process involves photographic emulsions that require exclusively light of the UV or visible range for producing and fixing images. The emulsions include coloured photochromic dyes and a system for amplification and exhibit photosensitivity comparable to those of the known silver-containing conventional materials. In general, this process is applicable for any kind of supports (paper, tissues, polymeric films).

Finally, the identity card 100 is covered with an upper lamination layer 109a and a lower lamination layer 109b. The lamination layers 109 provide security in that they protect the image 203 produced in the image area 205 from physical manipulation. The upper lamination layer 109a should be transparent to the photon wavelengths used for altering the transparent-to-opaque layer 105 and the opaque-to- transparent layer 103. Furthermore, the lamination temperature should be low enough as to not alter the transparent-to-opaque layer 105 or opaque-to-transparent layer 103, for example, in the range of 125 to 180 degrees Celsius. Suitable materials include PVC, PVC-ABS, PET, PETG, and PC.

Figure 2(c) is a cross-section view of yet another alternative embodiment for an identity card 100" that may be personalized with a colour image produced on the card during the personalization phase. A photon-sensitive print-pixel grid 111" is located above a carbon-doped PC layer 105 which in turn is located above a white opaque PC layer 107". The print-pixel grid 111" in this case consists of multiple sub-sub-pixels that may be selectively removed by exposure to photons of appropriate wavelength and intensity. The image area 205 may be customized with a colour image 203 by selectively removing coloured sub-sub-pixels from the photon-sensitive pixel- grid 111" and by subjecting the carbon-doped PC layer 105 selectively to photon- energy that alters select portions thereof from transparent to black.

While it is desirable to prepare the entire card during the manufacturing phase of the card life-cycle, in some embodiments applying the technology described herein that is not practical because the upper lamination layer 109a could prevent evaporation of dyes from the opaque-to-transparent layer 103 or 111". Therefore, if the alteration of one of the photon-sensitive layers requires evaporation or some other form of material removal in the process of transforming from one state to another, e.g., from opaque to transparent, the upper lamination layer 109a may be added during the personalization phase, for example, after the image area 205 has been personalized as described herein. Such lamination may be performed using DNP CL-500D lamination media from Dai Nippon Printing Co., Tokyo, Japan or other suitable lamination technology.

Turning now to the structure of the print-pixel grid 111, for which a small portion is illustrated in Figure 4. The print-pixel grid 111 is composed of an array of print-pixels 501. A print-pixel 501 corresponds to a pixel in a bitmap of an image, e.g., one pixel in a file in the .bmp format. In the small portion of a print-pixel grid 111 illustrated in Figure 4, contains a 4 x 7 grid of print-pixels 501. In a real-life print-pixel grid 111 a grid having many more print-pixels in each dimension would be necessary for producing a meaningful image. Each print-pixel 501 contains sub-pixels 503-G (a)-(f), 503-B (a)-(f), and 503-R (a)-(f), each corresponding to a unique colour, e.g., green (G), blue (B), and red (R) as illustrated in the example. For the purpose of being able to produce various colour combinations, each sub-pixel 503 is subdivided into at least two neighbouring sub-sub-pixels 505 of same colour. In the example of Figure 4, each print-pixel 501 is composed of 6x3 sub-pixels 503 and each sub-pixel 505 is composed of a 2 x 1 grid of sub-sub-pixels 505.

Sub-sub-pixels 505 are the smallest colour information within an image and cover an area of less than 100/µm, typically less than 50µm and preferentially about 42µm in a square.

It is easy to understand that other configurations of sub-pixels 503 and sub-sub-pixels 505 within a print-pixel 501 may be envisaged.

The term print-pixel is used herein to the equivalent of a pixel in a digital image that is printed in the print-pixel grid and having a plurality of sub-pixels that each form a portion of the print-pixel, and the corresponding areas in the photon- sensitive layers that cover the image area 205. A sub-pixel is a single-color area of the print-pixel. A sub-sub-pixel is a single addressable location in a sub-pixel. Thus, a sub-pixel is composed of at least two sub-sub-pixels. A sub-sub-pixel may take its exposed colour from either the print-pixel grid or any of the photon-sensitive layers. As must be appreciated, while Figures 4 illustrates a possible print-pixel structure, there are many more possible structures. All such alternatives must be considered equivalents to the print-pixel structures illustrated here as examples.

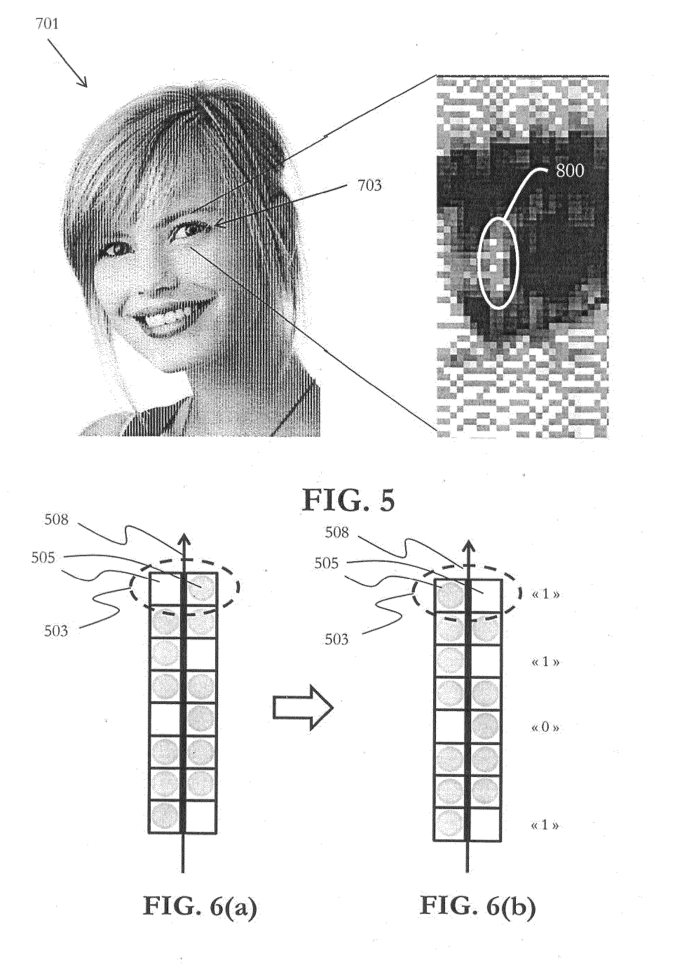

Figure 5 is a colour photograph 701 of a model and is presented here as an illustrative example for the method disclosed in W02011/045180. Consider the lower-left quarter 703 of the model's right eye (right and left being from the perspective of the viewer). This portion 703 of the model's eye is shown in greater magnification on the right side of the colour photograph 701 like a zoom.

The image 701 is created by selectively turning on specific colours from the transparent-to-opaque layer 105, the opaque-to-transparent layer 103, and from the print-pixel grid 111 for each sub-sub- pixel 505 that make up the print-pixels 501 forming the image.

Consider now the white surrounded area 800 in the zoomed image area.

This area 800 is schematically reproduced in figure 6(a) showing a line of eight "blue" sub-pixel 503 formed each for example by two neighbouring sub-sub-pixels 505.

Following the arrow 508, from the bottom to the top, a sub-sub-pixel 505 showing in figure 6(a) a grey dot 510 corresponds to a sub-sub-pixel 505 that is identified to be revealed as to the method disclosed in W02011/045180.

In detail, we have the following altering pattern of sub-sub-pixels:

| | |
|---|---|
| W | B |
| B | B |
| B | w |
| B | B |
| W | B |
| B | B |
| B | B |
| B | W |

W- corresponds to an unrevealed sub-sub-pixel 505 whereas B -corresponds to a colour-revealed sub-sub-pixel 505.

One underlying idea of the invention is that non-uniform sub-pixel, meaning a sub-pixel, where at least two sub-sub-pixels are in a different revealing state, may be used to embed data into an image while the consequences of altering the image quality are quite low.

Therefore, starting from the altering pattern of sub-sub-pixels 505 as shown in Fig. 6(a), the next step comprises the step of identifying in that altering pattern non-uniform sub-pixels 503. In the present case, lines 1, 4, 6 and 8 (from the bottom) are such non-uniform sub-pixels 503 because one sub-sub-pixel 505 has a dot (to be revealed) whereas the other within the same sub-pixel 503 does not.

In order to embed auxiliary data into said image, the altering pattern the sub-sub-pixels to be revealed of at least some selected of said identified sub-pixels 503 is modified according to a data coding pattern for embedding said auxiliary data.

For example, a possible coding pattern can be very simple and is based on the location of a revealed sub-sub-pixel within a sub-pixel. For instance the location of a revealed sub-sub-pixel within a sub-pixel corresponds to a defined data-value for example a bit-value "0" or "1". With regard to figure 6(b), a dot on the left with respect to arrow 508 can mean a "1" bit whereas a dot on the right with respect to arrow 508 can mean a "0".

In detail, the following modified altering pattern of sub-sub-pixels will be obtained:

| | | bit-value |
|---|---|---|
| B | W | "1" |
| B | B | - |
| B | W | "1" |
| B | B | - |
| w | B | "0" |
| B | B | - |
| B | B | - |
| B | W | "1" |

Thus, as shown in figure 6(b), the arrow 508 can be seen as a reading or writing direction and the code "1011" is coded in figure 6(b).

In the present example, the initial altering pattern (fig 6(a)) only differs from the modified altering pattern (fig. 6(b)) in line 8 from the bottom where there altering state of two neighboring sub-sub-pixels 505 are exchanged. Thus, depending on the auxiliary data, the alerting pattern of specific sub-sub-pixels 505 may remain unchanged, but will gain in function because the sub-sub-pixel will not only represent a colour information, but also a data value.

Then the state of at least one of the at least one photon-sensitive layers may be altered according to said modified altering pattern across the physical media thereby selectively revealing a selected subset of sub-sub-pixels and portions of photon-sensitive layers corresponding to other sub-sub-pixels 505 thereby producing an image composed of the revealed sub-sub-pixels and photon-sensitive layer portions corresponding to other sub-pixels 503, said embedded auxiliary data being contained in said selected identified sub-pixels 503.

The method can be executed for example by a computer or other microprocessor based devices. The method may be implemented as supplemental instructions within a software program containing instructions for producing an image as known in W02011/045180 and thus does only add very little additional costs for embedding auxiliary data, while increasing the security level of such a document with embedded auxiliary.

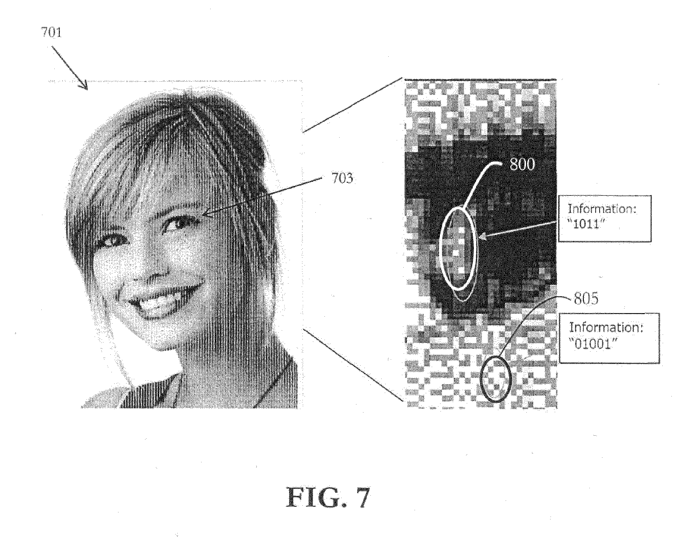

The image 710 in figure 7 is the same as in figure 5 but with auxiliary data embedded as described here above.

As can be seen in the zoom, two surrounded areas 800 and 805 embed respectively auxiliary data "1011" and "01001".

In the example of figure 7, the full picture comprises 111846 sub-pixel for which a couple of B-W sub-sub-pixel enables to encode up to 111846 bits of auxiliary data hidden in the photo. These 111846 may correspond to 13980 ASCII data characters (8 bits) or 15978 ASCII data Character (7bits). It is also possible to encode a small bitmap image. For robustness reasons, it is preferable to encode few hundreds of bytes several times in the same image for including some redundancy because such coding may be altered in the time for example by scratching.

It is therefore very easy to embed auxiliary data in an image. Such auxiliary data may be the name of the person on the photo with its birthday and some other personal information, for example a fingerprint of the person on the photo. But also other security information may be embedded.

The printpixels 501 form columns on said physical media and said sub-sub-pixels 505 of same color form parallel lines within said printpixels, said lines corresponding to a reading direction of the auxiliary data.

Also other coding pattern may be used.

It may be interesting when said image is an identity photo that the selected identified sub-pixels that will contain the auxiliary data is in an eye region of said photo.

Furthermore, not all non-uniform sub-pixels may contain auxiliary data.

It may also be envisaged to embed a flag or a specific data code for signaling the start and end of auxiliary data.

The present invention also concerns a method for reading such embedded auxiliary data in an image area on a physical media as described above. The reading direction has to be known by convention. As described above the printpixels may form columns on said physical media and the sub-sub-pixels of same color form parallel lines within said printpixels 501, said lines corresponding to a reading direction (arrow 508) of the auxiliary data.

Then for reading, the image 701 for example of figure 7 is scanned and in said scanned image non-uniform sub-pixels 503 are identified and converted into auxiliary data taking into account revealed and not revealed sub-sub-pixels according to a data coding pattern for embedding said auxiliary data. As already described for the coding operation, the data decoding pattern may be based on the location of a revealed sub-sub-pixel 505 within a sub-pixel 503. The location of a revealed sub-sub-pixel 505 within a sub-pixel 503 may correspond to a defined data-value, for example a bit-value like "0" or "1".

The present method therefore provides an easy and secure way to embed auxiliary data in an image and many possibilities are available for encoding data inside the image based on the current invention.

In a first alternative, the image can be encoded using an image processing for improving image for example with a dithering algorithm that can manage the decision to use a B-W or a W-B for a couple of sub-sub-pixel. In that case, it is still possible to encode data but the coding will be inverting or not the couple depending if the data to encode is "0" or "1". The decoding is then made by retrieving the inverted couple of sub-sub-pixels by reusing the same algorithm on the image.

Another alternative can be also made with a number higher than two sub-sub-pixels. As an example each sub-pixel can be divided into four sub-sub-pixels arranged in square. Each sub-pixel can be associated with 5 levels corresponding to 0 to 4 sub-sub-pixels revealed through the photosensitive layer. There are only one manner to reveal 0 or 4 sub-sub-pixels, four manners to reveal 1 or 3 sub-sub-pixels and six manners to reveal 2 sub-sub-pixels. So it is possible to encode two bits of data each time there is 1 to 3 sub-sub-pixels to reveal. Of course depending of the robustness and of the image quality we can encode only one bit using in addition some dithering algorithm.

As it can be seen in the document W02011/045180, one or two photosensitive layers can be used. The data encoding can be made independently of the number of layers covering a sub-pixel, the states to consider being "revealed" or "hidden", we do not care about the color (black or white) used for hiding the sub-sub-pixel.

## Claims

1. A method for producing an image (203) with embedded auxiliary data in an image area (205) on a physical media (100) presenting a printed print-pixel pattern (111) on a substrate surface (107) wherein the print-pixel pattern (111) comprises a plurality ofprintpixels (501), each printpixel (501) being composed of a plurality of differently-colored sub-pixels (503); each sub-pixel (503) comprising at least two neighboring sub-sub-pixel (505) of same color, the print-pixel pattern being covered with at least one photon-sensitive layer (103 ; 105) wherein the at least one photon-sensitive layer (103 ; 105) is in one of a plurality of states wherein the at least one photon-sensitive layer (103 ; 105) is alterable at selected locations from one of two states to another state of two states; comprising:
- determining an altering pattern of sub-sub-pixels (505) to be revealed by altering the state of at least one of the at least one photon-sensitive layers (103 ; 105) in said altering pattern across the physical media (100) for producing said image (203) in said image area (205),
- modifying the sub-sub-pixels (505) to be revealed of at least some sub-pixels partly revealed by the at least one photon-sensitive layer within the altering pattern according to a data coding pattern for embedding said auxiliary data,
- altering the state of at least one of the at least one photon-sensitive layers (103 ; 105) according to said modified altering pattern across the physical media thereby selectively revealing a selected subset of sub-sub-pixels (505).

2. Method according to claim 1, wherein said sub-sub-pixels (505) of same color form parallel lines within said printpixels (501), said lines corresponding to a reading direction of said auxiliary data.

3. Method according to claim 1, wherein said partly-revealed sub-pixels (503) are encoded with the data coding pattern depending on the location of a revealed sub-sub-pixel (505) within a sub-pixel (503).

4. Method according to claim 3, wherein the location of a revealed sub-sub-pixel (505) within a sub-pixel (505) corresponds to a defined data-value.

5. Method according to claim 3, wherein the location of a revealed sub-sub-pixel (505) within a sub-pixel (505) corresponds to a determinable location or a modification of the determinable location as a function of the data-value.

6. Method for reading embedded auxiliary data in an image area (205) on a physical media (100) presenting a printed print-pixel pattern (111) on a substrate surface wherein the print-pixel pattern comprises a plurality of printpixels (501), each printpixel (501) being composed of a plurality of differently-colored sub-pixels (503); each sub-pixel (503) comprising at least two neighboring sub-sub-pixel (505) of same color, the print-pixel pattern (111) being covered with at least one photon-sensitive layer (103 ; 105) wherein the at least one photon-sensitive layer (103 ; 105) is altered at selected locations from one of two states amongst a revealing state and a non-revealing state, comprising:
- identifying in said image non-uniform sub-pixels (503) corresponding to sub-pixels having both revealed and non-revealed sub-sub-pixels,
- converting said identified non-uniform sub-pixels (503) into auxiliary data taking into account revealed and non-revealed sub-sub-pixels (505) according to a data decoding pattern for embedded auxiliary data.

7. Method according to claim 6, wherein said sub-sub-pixels (505) of same color form parallel lines within said printpixels (501), said lines corresponding to a reading direction of said auxiliary data.

8. Method according to claim 6, wherein the data decoding pattern is based on the location of a revealed sub-sub-pixel (505) within the non-uniform sub-pixel (503).

9. Method according to claim 8, where the location of a revealed sub-sub-pixel (505) within a sub-pixel (503) corresponds to a defined data-value of some auxiliary data.

10. Method according to claim 8, where the location of a revealed sub-sub-pixel (505) within a sub-pixel (503) corresponds to a determinable location or a modification of the determinable location, said modification being made as a function of a data-value of some auxiliary data.

11. A medium (100) personalized by selective exposure to photons, comprising :
- a print-pixel pattern layer having a print pixel pattern (111) comprising a plurality of print pixels (501), each printpixel (501) being composed of a plurality of differently-colored sub-pixels (501); each sub-pixel (503) comprising at least two neighboring sub-sub-pixel (505) of same color,
- at least one photosensitive layer (103 ; 105) composed of a photon-sensitive material that transitions from a first state to a second state upon exposure to photons of a first wavelength and intensity,
- at least some sub-pixels (503) having revealed and non revealed sub-sub-pixels on which auxiliary data are encoded according to a coding pattern.
